Europäisches Patentamt

**European Patent Office**

**Office européen des brevets**

(11) Veröffentlichungsnummer: **0 193 213**
**A2**

# (12) EUROPÄISCHE PATENTANMELDUNG

(21) Anmeldenummer: **86105041.7**

(22) Anmeldetag: **25.06.82**

(51) Int. Cl.⁴: **B 65 D 65/40**
**B 32 B 33/00**

(30) Priorität: **08.07.81 DE 3126979**

(43) Veröffentlichungstag der Anmeldung:
**03.09.86 Patentblatt 86/36**

(84) Benannte Vertragsstaaten:
**AT BE CH DE FR GB IT LI LU NL SE**

(60) Veröffentlichungsnummer der früheren
Anmeldung nach Art. 76 EPÜ: **0 069 296**

(71) Anmelder: **Belz, Roland Karl**
**Sonnenhalde 31**
**D-7022 Leinfelden-Echterdingen-1(DE)**

(72) Erfinder: **Belz, Roland Karl**
**Sonnenhalde 31**
**D-7022 Leinfelden-Echterdingen-1(DE)**

(74) Vertreter: **Patentanwälte Ruff und Beier**
**Neckarstrasse 50**
**D-7000 Stuttgart 1(DE)**

(54) **Verbundfolie.**

(57) Die Erfindung betrifft eine Verbundfolie bzw. Verbundplatte, bei der mindestens eine äußere, in Wasser normalerweise unlösliche Deckschicht mit einer in Wasser lösbaren,
mindestens einschichtigen Reaktionsschicht verbunden ist,
die einen Lösungsvermittler für die Deckschicht enthält. Zur
Erzielung einer völligen Dichtheit ist mindestens die Deckschicht durch Extrudieren einer Folie aus einem thermoplastischen Kunststoff porenfrei ausgebildet. Die Deckschicht
und/oder die Reaktionsschicht der Folie bestehen mindestens zum Teil aus Materialien mit düngenden bzw. bodenverbessernden Eigenschaften, die bei der Auflösung der
Folie freigesetzt werden. Die Verbundfolie dient vorwiegend
für Verpackungszwecke und kann beispielsweise als Schachtel ausgebildet sein.

EP 0 193 213 A2

Anmelder:                 Roland Karl Belz
                          Sonnenhalde 31
                          D-7022 Leinfelden-Echterdingen 1

A 22 810 EP

## Verbundfolie

Die Erfindung betrifft eine Verbundfolie aus mindestens zwei
Schichten, bei der mindestens eine ..      in Wasser normalerweise unlösliche Deckschicht mit einer in Wasser lösbaren,
mindestens einschichtigen Reaktionsschicht verbunden ist,
die einen Lösungsvermittler für die Deckschicht enthält und
mindestens die Versiegelungsschicht durch Extrudieren einer
Folie aus einem thermoplastischen Kunststoff porenfrei ausgebildet ist.

In der deutschen Offenlegungsschrift 2 703 005 des Anmelders
ist eine zur einmaligen Benutzung bestimmte Folie zur Auflage auf einen Toilettensitz beschrieben. Diese Folie kann bei
einer Ausführungsform als Verbundfolie ausgebildet sein, wobei eine wasserlösliche Schicht, die dem Benutzer zugewandt
ist, auf ihrer dem Benutzer abgewandten Seite eine in Wasser
unlösliche Deck- bzw. Versiegelungsschicht aufweist. Diese
Deckschicht kann in saurem bzw. basischem Milieu aufgelöst
werden. Hierzu enthält die wasserlösliche Schicht einen entsprechenden basischen oder sauren Zusatz, so daß die Folie beim vollständigen Eintauchen in Wasser als Ganzes löslich
ist, nicht jedoch dann, wenn Wasser nur mit ihrer Deckschicht
in Berührung kommt.

In der europäischen Patentanmeldung 80 108 243.9 des Anmelders
(Veröffentlichungs-Nr. 32 244), die nicht vorveröffentlicht
ist, ist eine Weiterbildung dieser Toilettensitzauflage beschrieben und auch erwähnt, daß eine derartige Verbundfolie auch
als Verpackungsmaterial und zur Herstellung von Tragtaschen,
Beuteln u.dgl. geeignet ist.

Nach der Erfindung kann die Beseitigung der Folie bzw. von
Verpackungen aus der Folie durch Auflösen nicht nur eine Beseitigung eines Umweltproblemes darstellen, sondern sogar noch
in einen besonderen Nutzen umgestaltet werden. Hierzu bestehen
die Reaktionsschicht und/oder die Deckschicht mindestens zum
Teil aus Materialien, die nach dem Auflösen Bodenverbesserungseigenschaften und/oder Düngemitteleigenschaften besitzen.

Es wurde auch gefunden, daß sich Polymere und andere Bestandteile für die Herstellung der erfindungsgemäßen Verbundfolie
eignen, die sich beim Zerfall der Folie bzw. der daraus hergestellten Verpackung sogar positiv auf die Umwelt auswirken.
So können Bestandteile der Folie oder die gesamte Folie bodenverbessernde und je nach Wahl des Lösungsvermittlers auch düngende Eigenschaften besitzen, wenn die aus ihnen hergestellten
Verpackungen nach ihrem Gebrauch normalerweise einer gezielten Verrottung oder Kompostierung unterworfen oder einfach
weggeworfen werden.

Dies ist besonders in der Land- und Gartenwirtschaft von Vorteil, wo viele Produkte in Kunststoffsäcken verpackt sind.
Die Verpackungen können im Rahmen der Kompostierung zusammen
mit anderen Abfällen zur Verrottung gebracht werden, wobei die düngenden bzw. bodenverbessernden Bestandteile zur Wirkung kommen. Die Folie kann auch in den Boden eingearbeitet oder beispielsweise bei Pflanzen mit Erdballen mit diesen eingegraben werden.

Die erfindungsgemäße Folie ist nicht nur in flexibler Form sondern auch in selbsttragender Form, insbesondere in halbsteifer bis steifer Blatt- bzw. Plattenform für viele Anwendungszwecke, insbesondere als Verpackungsmaterial hervorragend geeignet. Eine solche mechanische Tragfähigkeit bzw. Steifheit kann erreicht werden, indem die Polymere der Reaktions- und/oder der Deckschicht selbst steif formuliert werden oder die Reaktionsschicht und/oder die Deckschicht mit Füllstoffen, insbesondere mineralischen Füllern und/oder Fasermaterial versehen werden. So kann die Reaktionsschicht der Verbundfolie nach Art von Papier, Karton, Pappe oder Wellpappe ausgebildet sein, wobei das Bindemittel wasserlöslich ist oder durch den in der Reaktionsschicht enthaltenen Lösungsvermittler lösbar ist, der vorzugsweise gleichzeitig auch Lösungsvermittler für die Deckschicht ist. Weiterhin kann die Reaktionsschicht auch entsprechend der Papierherstellung durch Anschwemmen der Bestandteile aus wässriger Lösung in alkalischem bzw. saurem Milieu hergestellt werden. Die Verbundfolie kann in Form von Zuschnitten für Verpackungsmaterial vorliegen und vorgestanzt sein und Prägelinien für eine spätere Faltung besitzen. Sie kann auch zu Schachteln ggf. mit Deckel vorgeformt sein. Sie eignet sich insbesondere als Verpackung für Zigaretten und andere Waren, deren Verpackung von den Verbrauchern normalerweise mehr oder weniger achtlos weggeworfen werden und eine Verschmutzung der Umwelt bedeuten, wenn sie sich nicht innerhalb kurzer Zeit auflösen bzw. verrotten.

Bei einer Ausführungsform der Erfindung ist die Verbundfolie bedruckt, insbesondere bunt bedruckt, was auch dann keine Umweltbelastung zur Folge hat, wenn das Verpackungsmaterial vom Verbraucher einfach weggeworfen wird, weil die Verpackungen
durch Eindringen von Feuchtigkeit rasch zerfallen. Wird die
Reaktionsschicht getrennt von der Deckschicht hergestellt,
so wird vorzugsweise die Reaktionsschicht bedruckt, wobei die
Druckfähigkeit durch die Verwendung entsprechender Füllstoffen
begünstigt werden kann.

Werden die Verpackungen nach ihrem Gebrauch normalerweise mit
Flüssigkeiten vermischt oder durch solche weggespült, dann
haben sich weiterhin Bestandteile mit Eigenschaften als Flokkungshilfsmittel als besonders vorteilhaft erwiesen, worauf
noch eingegangen wird. Mit besonderem Vorteil besteht die erfindgungsgemäße Verbundfolie bzw. die daraus hergestellte Verpackung ausschließlich aus solchen Materialien, die bei Zutritt
von Feuchtigkeit oder Flüssigkeit an der Seite der Reaktionsschicht zerfallen bzw. sich durch gegenseitige Lösungsvermittlung auflösen.

Die Deckschicht und/oder die Reaktionsschicht können an ihren
freien Oberflächen auch eine textile Beschichtung aus Einzelfasern aufweisen, die in der Folienoberseite verankert oder
mit diesen verklebt sind. Dabei kann die Länge der Fasern,
die in begrenztem Maße untereinander verfilzt sind, im Bereich
von ca. 0,01 bis 2 mm oder höher liegen. Die Fasern bringen
eine mechanische Verstärkung der Folie und verhindern ein Aneinanderhaften aufgrund etwaiger elektrostatischer Aufladung.
Trotzdem läßt sich die Folie nach ihrem Gebrauch völlig auflösen, da die Fasern zwar in gewisser Weise miteinander verfilzt, aber nicht bleibend miteinander verbunden sind. Als
Fasern werden vorzugsweise solche aus Cellulose, insbesondere
Baumwolle verwendet. Aber auch andere Faserstoffe sind geeignet.

Die Deckschicht und die nächstfolgende und ggf. weitere
Schichten sind vorzugsweise flächig miteinander verbunden,
insbesondere verschweißt. Sie können jedoch auch durch Anlösen der einen und/oder der anderen Oberfläche oder mit
Hilfe eines Klebers verklebt sein. Die Deckschicht und die
Reaktionsschicht bestehen vorzugsweise aus demselben, in
Wasser normalerweise unlöslichen Kunststoff, wobei die
Reaktionsschicht zusätzlich lösungsvermittelnde Zusätze für
sich und die Deckschicht enthält. Dabei können diese Zusätze
in der Reaktionsschicht gleichmäßig verteilt oder im Grenzbereich zur Deckschicht in höherer Konzentration vorliegen.
Dies hängt in der Regel davon ab, wie dick die Reaktionsschicht ist und wie leicht sich die Unlöslichkeit in Wasser
mit Hilfe des Lösungsvermittlers in eine Löslichkeit umwandeln läßt. Die Reaktionsschicht kann, wenn sie aus einem in
Wasser lösbaren Material, wie Hydroxypropylcellulose, besteht, auch frei von lösungsvermittelnden Zusätzen sein und
an der zur Deckschicht weisenden Seite eine zusätzliche Zwischenschicht aufweisen, die die lösungsvermittelnden Zusätze
für die Deckschicht enthält.

Da die Deckschicht nicht selbsttragend zu sein braucht, wenn die
Reaktionsschicht die Tragfunktion übernimmt, ist sie in der
Regel dünner als die Reaktionsschicht. Sie kann sehr dünn gehalten werden, da sich gezeigt hat, daß aufgrund der Herstellung durch Extrusion bereits eine Schichtdicke von 1 bis
5 µm, insbesondere 2 bis 3 µm völlig ausreicht, um die gewünschte Dichtigkeit zu erzielen. In der Regel liegt daher
die Schichtdicke der Deckschicht unter 10 µm. Die Dicke der
Reaktionsschicht hängt davon ab, wieviel weitere Schichten
die Verbundfolie noch enthält und welche mechanischen Belastungen sie aushalten soll. Ihre Schichtdicke liegt bei mindestens 10 bis 50 µm und kann die Stärke von Papier, Karton
oder Pappe haben. Die Dicke der Reaktionsschicht bzw. der
Reaktionsschichten kann dabei bis zu 0,5 mm oder gar bis 1 mm
betragen, wobei hier keine Grenzen gesetzt sind. Auch können
in die Schichten oder zwischen die Schichten noch Verstärkungen eingelegt sein, wobei vorzugsweise darauf geachtet wird, daß die Verstärkungen ihrerseits beim Auflösevorgang leicht zerfallen, wie dies beispielsweise bei Einzelfasern der Fall ist. Die Reaktionsschicht kann auch porös ausgebildet sein und sogar die Struktur von Wellpappe besitzen, insbesondere einen Aufbau von Wellpappe mit Feinwelle (E-Welle) und/oder Doppelwelle. Es sind Dicken der Verbundfolie bis 5 mm und mehr möglich. Wenn es auf die mechanische Belastbarkeit der Deckschicht ankommt, kann diese aber auch gleich dick oder dicker als die Reaktionsschicht gehalten werden, insbesondere, wenn die Deckschicht ohne Gefährdung der Wasserfestigkeit einen bestimmten Abrieb oder Verkratzungen aushalten soll. Die Deckschicht kann dann selbsttragend bis steif ausgebildet werden, wobei dem Polymeren der Reaktionsschicht dann im wesentlichen nur noch die Aufgabe zukommen kann, als Träger bzw. Bindemittel für den Lösungsvermittler zu dienen.

Zumindest dann, wenn die Dicke der Deckschicht in der Größenordnung der Dicke der Reaktionsschicht liegt oder die Deckschicht gar dicker ist als letztere, dann wird die Reaktionsschicht vorzugsweise so strukturiert und formuliert, daß sie sich relativ langsam auflöst, zuvor jedoch so viel wie möglich an Feuchtigkeit speichert. Dadurch kann der Lösungsvermittler in der Reaktionsschicht angelöst werden und dessen Lösung wiederum die Lösung der Deckschicht veranlassen, bevor die Reaktionsschicht abgelöst wird und damit die Gefahr besteht, daß der Lösungsvermittler weggewaschen wird, bevor die Deckschicht gelöst ist. Für diesen Zweck eignen sich für die Reaktionsschicht als Bindemittel quellfähige Substanzen, die bei Wasserzutritt gallertig werden, aber erst dann zerfallen, wenn auch die Deckschicht zerfällt. Auch ist es möglich, das Polymere der Reaktionsschicht so einzustellen, daß es bei im wesentlichen neutralem pH oder bei schwach saurem bzw. schwach basischem pH löslich ist, nicht aber in stark saurem bzw. stark alkalischem pH. Wenn der pH bei Wasseraufnahme durch den Lösungsvermittler aber relativ stark sauer bzw. stark basisch wird, findet zunächst nur eine Auflösung der Deckschicht statt. Ist diese abgelöst und der Lösungsvermittler teilweise ausgelaugt, kann sich auch die Reaktionsschicht lösen.

Das Material der Deckschicht ist vorzugsweise elastisch formuliert, damit die Folie bzw. Folienplatte oder ein gestanzter oder vorgeprägter Zuschnitt für eine Verpackung gebogen
oder geknickt werden kann, ohne daß die Deckschicht bricht
oder reißt.

Als Material für die Deckschicht eignen sich solche extrudierbaren Kunststoffe, die in Wasser und den üblicherweise
vorkommenden, im wesentlichen neutralen wässrigen Lösungen
nicht löslich sind, durch geeignete Lösungsvermittler, insbesondere Säuren oder Basen aber löslich gemacht werden können. Die Reaktionsschicht kann dagegen aus einem wasserlöslichen oder verzögert löslichen Kunststoff wie Polyvinylalkohol oder Hydroxypropylcellulose (Klucel J von Hercules
Powder) bestehen oder diese enthalten, z. B. als Bindemittel
für Fasern und/oder für den Lösungsvermittler.

Bevorzugte Materialien für eine flexible Deck- oder Reaktionsschicht sind Co- bzw. Terpolymere von ungesättigten organischen Säuren wie Acrylsäure, Methacrylsäure, Maleinsäureanhydrid und Crotonsäure als mit dem Lösungsvermittler reagierende Komponente, mit Vinyläthern oder Acrylaten als flexibilisierende Komponente. Dabei können die reaktiven Komponenten und die flexibilisierenden Komponenten jeweils für
sich allein oder als Mischung eingesetzt werden. Beispiele
für flexible Materialien sind in der Tabelle aufgeführt, insbesondere die Nr. 39 und 68.

Bevorzugte Materialien für eine steife Deck- bzw. Reaktionsschicht sind Co- bzw. Terpolymere von ungesättigten organischen Säuren wie Acrylsäure, Methacrylsäure, Maleinsäureanhydrid oder Crotonsäure als mit dem Lösungsvermittler reagierende Komponente, mit Styrol oder Vinylacetat oder Methylmetacrylat als steifmachende Komponenten und Vinyläthern bzw.
Acrylaten als zähigkeitsvermittelnde Komponenten. Dabei können die reaktiven Komponenten und die flexibilisierenden bzw.
zähigkeitsvermittelnden Komponenten jeweils für sich allein
oder als Mischung eingesetzt werden.

So besteht bei einer Ausführungsform vorzugsweise mindestens die Deckschicht aus einer thermoplastischen, in
Wasser unlöslichen,jedoch in basischem Medium löslichen
homopolymeren oder copolymeren Säure, insbesondere einer
solchen, die unter Verwendung von Acrylsäure, Methacrylsäure, Crotonsäure und/oder Maleinsäureanhydrid mit Styrol
und Vinyläther im Molverhätnis 1 : 1 : 0,3 gewonnen ist.

Geeignete extrudierbare Kunststoffe sind auch feste Copolymerisate aus Vinylacetat und einem geringen Teil Crotonsäure,
die als niedrigviskoses Polymerisat vorliegen und alkalilöslich sind. Ein derartiges Polymerisat wird beispielsweise
unter der Bezeichnung Vinnapas C 305 von der Firma Wacker-
Chemie GmbH, München vertrieben.

Auch können die einzelnen Schichten der Verbundfolie aus Mischungen von Kunststoffen bestehen.

Als Lösungsvermittler zum Auflösen der Deckschicht kommen für
saure Polymerisate,insbesondere wasserlösliche Carbonate, sekundäre und tertiäre Phosphate, Silicate, Borate, Amine und
basische Amide in Betracht. Die Mitverwendung von sogenannten
Sprengmitteln, die bei Kontakt mit Wasser stark aufquellen
oder Gase erzeugen, kann ebenfalls von Vorteil sein. Ein solches Sprengmittel ist beispielsweise Natriumcarboxymethylcellulose (Nymcel ZSB 10 von Nyma). Dabei wird bei sämtlichen
Materialien für die Verbundfolie vorzugsweise darauf geachtet, daß sie umweltfreundlich sind, wie dies bei den oben
genannten Produkten weitgehend der Fall ist.

Zur Herstellung der Verbundfolie werden einzelne, vorzugsweise sämtliche Schichten der Folie aus thermoplastischen
Stoffen mit den entsprechenden Eigenschaften durch Extrudieren geformt und miteinander verbunden. Dabei können die einzelnen Schichten als getrennte Folien extrudiert und danach
miteinander verbunden werden. Die Verbindung erfolgt vorzugsweise, solange die Folien noch heiß und klebrig sind, durch einfaches Aufeinanderlegen. Die Oberflächen können jedoch, wie bereits erwähnt, auch nachträglich klebrig gemacht werden. Die aus dem Extruder kommenden und ggf. gereckten Folien können unmittelbar weiterverarbeitet oder zur Zwischenlagerung aufgerollt werden und zwar einzeln und vorzugsweise auch als Verbundfolie.

Die einzelnen Schichten können durch eine Koextrusionsdüse extrudiert und dabei miteinander verbunden werden. Hierdurch wird eine besonders innige Verbindung erhalten. Dabei sollte jedoch darauf geachtet werden, daß die Bestandteile der beiden Schichten so aufeinander abgestimmt sind, daß eventuell entstehende Abfälle in dem einen oder anderen Extruder wieder verwendbar sind, ohne die Materialzusammensetzung der Schichten nachteilig zu beeinflussen. So werden Abfälle, die Lösungsvermittler enthalten, zur Herstellung einer den Lösungsvermittler enthaltenden Reaktionsschicht oder Zwischenschicht wiederverwendet.

In der Regel kommen die einzelnen Folien dicker aus dem Extruder heraus als der gewünschten Dicke in der Verbundfolie entspricht. In diesem Falle werden die Folien auf die gewünschte Dicke gereckt, was einzeln oder im Verbund geschehen kann.

Für die erfindungsgemäße Folie gibt es zahlreiche Anwendungsmöglichkeiten, die vor allem auch auf dem Verpackungssektor liegen. Die Beseitigung von nicht mehr brauchbaren Verpackungsmaterialien stellt heute ein erhebliches Problem dar. Dies kann durch die erfindungsgemäße Folie beseitigt werden, da sie nach Gebrauch in Wasser bzw. wässrigen Lösungen aufgelöst werden kann und in ihrer Materialbeschaffenheit so zusammengesetzt werden kann, daß die dabei in Lösung gehenden Stoffe unschädlich bzw. umweltfreundlich sind. Die Maleinsäureanhydrid- und die Acrylsäure-Copolymere ergeben nach der Hydrolyse ähnliche Produkte wie die in großem Umfang als Flockungshilfsmittel bei der Klärschlammaufbereitung verwendeten Polymeren auf Acrylsäurebasis. Sie sind daher im Abwasser nützliche Produkte.

Das Cellulosederivat Klucel ist nach Herstellerangaben in toxikologischer Hinsicht ebenso einzuschätzen wie gereinigte Cellulose.

Die als Lösungsvermittler einsetzbaren Carbonate, Phosphate Silikate und Borate sind Bestandteile von Waschmitteln, ebenso das Sprengmittel Nymcel, das auch als Flockungshilfsmittel eingesetzt werden kann.

Da die erfindungsgemäße Verbundfolie mindestens zum Teil aus thermoplastischen Materialien besteht, können die Verpackungen aus der Folie durch Verschweißen oder Versiegeln dicht verschlossen werden.

Dabei besitzen alle Verpackungsformen die Eigenschaft, daß sie sich beim Wegwerfen nach dem Gebrauch in wässrigem Milieu oder bei Zutritt von Feuchtigkeit, z. B. im Freien, innerhalb einstellbarer Zeit auflösen.

Bei einer bevorzugten Ausführungsform der Erfindung besitzt die Folie die Form eines Kartons, einer Dose, einer Schachtel o. dgl. Dabei kann die Wandung jeweils so ausgebildet sein, daß sie sowohl an ihrer Innen- als auch an ihrer Außenseite eine Deckschicht aufweist. Dies kann dadurch erreicht werden, daß zur Bildung einer Wandung jeweils zwei Verbundfolien so aufeinander gelegt werden, daß ihre wasserlöslichen Seiten einander zugewandt sind und die Deckschichten nach außen weisen. Auf diese Weise sind die Schachteln u. dgl. feuchtigkeitsunempfindlich. Werden sie dagegen bei oder nach ihrem Gebrauch mechanisch aufgerissen, dann kann Wasser zwischen die wasserlöslichen Schichten der Folie gelangen,

A 22 810 EP

so daß sich die Folien und damit die Schachteln u. dgl. auflösen können. Es ist aber auch möglich, die Verbundfolie so
auszubilden, daß eine wasserlösliche Reaktionsschicht beidseitig mit einer Deckschicht versehen ist. Nach einer mechanischen Zerstörung ist auch diese Folie völlig auflösbar, da
das Wasser zwischen den Deckschichten in die Folie eindringen
und die Reaktionsschicht und danach die Deckschicht lösen
kann. Bei dieser Ausführungsform ist es weiterhin möglich,
die Reaktionsschicht im Innern porös auszubilden oder mit
einer saugfähigen Einlage zu versehen, wodurch das Eindringen
von Wasser in die Reaktionsschicht begünstigt und damit der
Auflösevorgang beschleunigt wird. Ähnliches gilt für Verpackungen aus einer steifen Verbundfolie, die wie bereits
erwähnt, in der Trägerschicht eine Wellenstruktur haben kann.

Die physikalischen und auch die chemischen Eigenschaften der
einzelnen Schichten der Verbundfolie können dadurch variiert
werden, daß für diese Schichten Kunststofformulierungen verwendet werden, deren Zusammensetzung in entsprechender Weise
variiert wird. Die Auflösungsgeschwindigkeit der einzelnen
Schichten kann durch das Verhältnis des Säure- bzw. Basenanteils im Copolymeren bzw. Terpolymeren zum Anteil an Comonomeren bzw. Termonomeren sowie zusätzlich durch Art und Gehalt des Lösungsvermittlers in der Reaktionsschicht bestimmt
werden. Weiterhin kann die Auflösungsgeschwindigkeit für die
Verbundfolie dadurch vermindert werden, daß weniger gut lösliche oder nicht gut lösliche Stoffe in disperser Phase oder
in gelöster Form in die Materialien der einzelnen Schichten
eingelagert werden. Falls erwünscht,können in die eine und/
oder andere Schicht auch die Klebrigkeit erhöhende Zusätze
eingelagert werden.

A 22 810 EP

Gemäß einer weiteren Ausführungsform der Erfindung kann der Lösungsvermittler für die an sich in Wasser unlösliche Deckschicht auch in der Weise in die Reaktionsschicht eingelagert werden, daß wasserlösliche Hohlfasern oder poröse Hohlfasern verwendet werden, die mit dem Lösungsvermittler gefüllt oder imprägniert sind. Hierdurch kann die Einmischung bzw. das Einbinden eines Lösungsvermittlers, der mit dem Material der Reaktionsschicht nicht ohne weiteres mischbar ist, erleichtert werden. Es ist auch möglich, den Lösungsvermittler in verkapselter Form in der Reaktionsschicht bzw. in der Randschicht zur Versiegelung vorzusehen. So kann der Lösungsvermittler mit Vorteil in sogenannte Mikrokapseln eingeschlossen sein, deren Haut bzw. Umhüllung aus wasserlöslichem Material besteht, das bei der Herstellungstemperatur nicht schmilzt.

Weitere Merkmale der Erfindung ergeben sich aus der folgenden Beschreibung von bevorzugten Ausführungsformen in Verbindung mit der Zeichnung und den Ansprüchen.

In der Zeichnung zeigen:

Fig. 1 einen Querschnitt durch eine Ausführungsform der Erfindung in Form einer Verpackung für trockenes Gut,

Fig. 2 die Ausführungsform nach Fig. 1 nach dem Entleeren und dem Zutritt von Wasser, jeweils in schematischer Darstellung,

Fig. 3 einen Querschnitt durch eine andere Ausführungsform in Form einer Verpackung für wasserhaltiges Gut.

A 22 810 EP

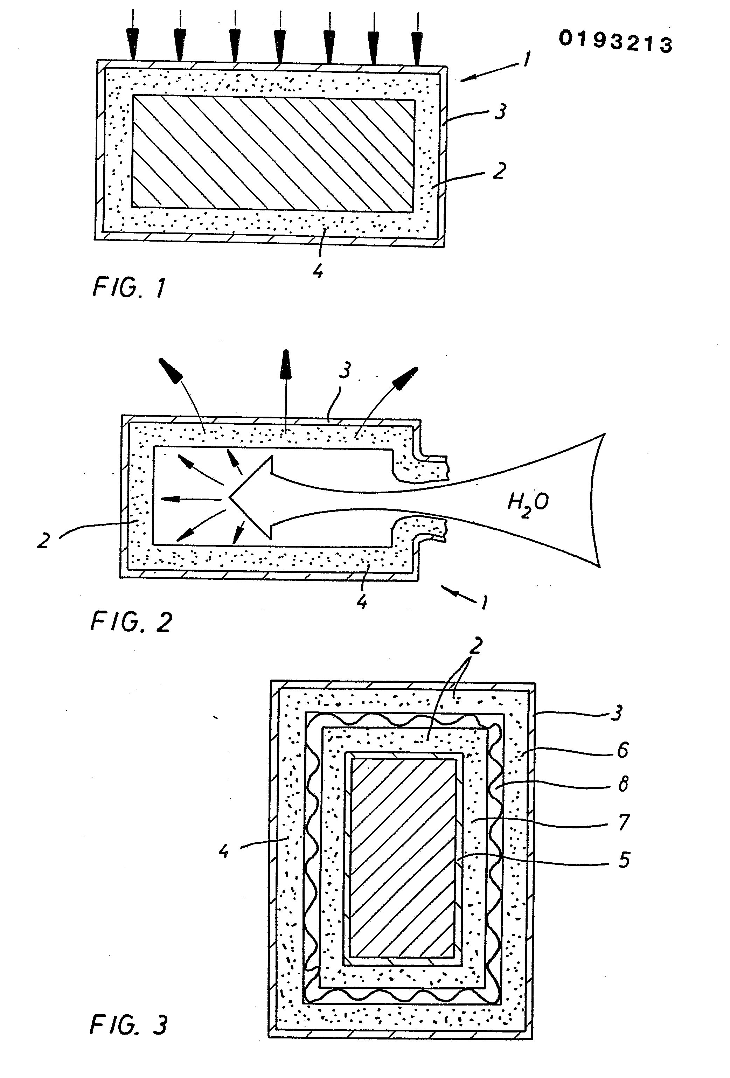

Bei der in den Figuren 1 und 2 dargestellten Ausführungsform der Erfindung sind zur besseren Übersichtlichkeit die Wandstärken der einzelnen Schichten der Verpackung übertrieben groß dargestellt. Die Wandung 1 der Verpackung weist eine selbsttragende Reaktionsschicht 2 auf, die an ihrer Außenseite mit einer dünneren Deckschicht 3 versehen ist. Das Verhältnis der Dicken bzw. Wandstärken von Reaktionsschicht zu Deckschicht liegt bei ca. 3 : 1. Sowohl die Reaktionsschicht 2 als auch die Deckschicht 3 bestehen aus einem thermoplastischen freien Carboxylgruppen aufweisenden oder solchen unter Einwirkung von Wasser bildenden Copolymer, das in basischem Milieu löslich ist, nicht jedoch in sauren oder im wesentlichen neutralen Lösungen. Die Reaktionsschicht 2 enthält zusätzlich noch feinste Partikel 4 einer basischen Substanz, die als Lösungsvermittler eingelagert ist. Dabei ist die Menge an Lösungsvermittler 4 so bemessen bzw. in einem ausreichenden Überschuß vorhanden, um sowohl die Reaktionsschicht als auch die Deckschicht lösbar zu machen.

Die in Fig. 1 dargestellte Verpackung hat im Querschnitt eine geschlossene Form und kann beispielsweise durch Koextrusion der beiden Schichten durch eine entsprechend gestaltete Rechteck-Düse direkt als Rechteckprofil hergestellt werden. Dabei können aus dem erhaltenen Endlosprofil entsprechende Stücke abgelängt und nach dem Befüllen an den Enden durch Verschweißen verschlossen werden. Die Verpackung dient für stückiges bis pulverförmiges Gut, so z. B. für Kleinwaren für den Haushalt, wie Nägel, Schrauben u. dgl., kann auber auch für Zigaretten, Nahrungsmittel usw. Anwendung finden.

A 22 810 EP

Durch die wasserfeste Deckschicht ist die Verpackung beständig gegen Wasserzutritt von außen. Nach dem Öffnen und Entleeren der Packung kann, wie dies in Fig. 2 schematisch dargestellt ist, Wasser in die Packung eindringen und die Reaktionsschicht aufgrund des darin gleichmäßig verteilten Lösungsvermittlers allmählich auflösen. Die Feuchtigkeit dringt durch die erweichte Reaktionsschicht bis zur Deckschicht und vermag diese aufgrund des gelösten alkalischen Lösungsvermittlers und des damit erhaltenen hohen pH-Wertes aufzulösen. Auf diese Weise wird die Packung vollständig aufgelöst, wobei die Zeitspanne, innerhalb der die Packung bei Zutritt von Wasser verfallen soll, durch entsprechende Formulierung der Schichten eingestellt werden kann.

Es ist auch möglich, die Packung durch Falten aus einer Folie bzw. Platte herzustellen und die Ränder durch Schweißen oder Kleben miteinander zu verbinden. Bei ausreichender Überlappung der Ränder kann die Reaktionsschicht an den Schnittkanten ohne Nachteil ungeschützt verbleiben, da in der Regel die Packungen vor Entnahme des Inhalts nicht unmittelbar mit Wasser in Berührung kommen, sondern ihren Inhalt lediglich vor Feuchtigkeitszutritt schützen sollen.

Es ist auch möglich, die erfindungsgemäße Folie durch Tiefziehen o. dgl. zu verformen und damit eine Packung herzustellen, die aus einem Karton besteht, auf dem der zu verpackende Artikel liegt und diesen dann mit einem haubenförmig geformten durchsichtigen Kunststoffteil aus der erfindungsgemäßen Folie zu überdecken, das mit seinen Rändern mit dem Karton fest verbunden ist und den zu verpackenden Gegenstand somit einschließt. Hierbei hat der Karton vorzugsweise ebenfalls den Aufbau der erfindungsgemäßen Folie bzw. Platte.

Bei der in Fig. 3 dargestellten Ausführungsform der Erfindung weist die Packung zusätzlich zu der äußeren Deckschicht 3 eine innere Deckschicht 5 auf, so daß die Packung auch innen mit einer Flüssigkeit gefüllt werden kann, ohne daß die Packung aufgelöst wird. Die Reaktionsschicht 2 ist ebenfalls doppelt ausgebildet, wobei ein äußerer Teil 6 der Reaktionsschicht 2 von einem inneren Teil 7 durch eine als Abstandhalter dienende Wellenstruktur 8 getrennt sind. Die beiden Reaktionsschichten können auch lediglich lose aneinanderliegen. die Wellenstruktur 8 dient dazu, nach dem Aufreißen der Packung den freien Wasserzutritt zwischen die beiden Teile 6 und 7 der Reaktionsschicht 2 zu ermöglichen, damit der Auflösungsvorgang nach Gebrauch der Packung schnell stattfinden kann. Die Wellenstruktur kann aus einem Fasermaterial bestehen, das nach dem Auflösen der Verpackung oder währenddessen ebenfalls zerfällt. Es ist auch möglich, aus einer derartigen doppelten Verbundfolie mit Deckschichten auf beiden Seiten Dosen und Flaschen zu fertigen, beispielsweise durch Tiefzieh- oder Blasverfahren.


## Beispiele

Im folgenden werden einige Beispiele für die Herstellung von sauren Copolymeren und Termonomeren für die Deckschicht aufgeführt, wobei diese Polymere, wenn sie mit basischen Stoffen vermischt sind, auch als Material für die Reaktionsschicht verwendet werden können. Als die Löslichkeit in Basen bewirkendes Monomer ist Maleinsäureanhydrid bevorzugt Als Comonomere werden bei Copolymeren vorzugsweise Styrol oder Methacrylat und bei Terpolymeren zusätzlich Äthylvinyläther oder Methylacrylat sowie Butylacrylat verwendet.

A 22 810 EP

Die Polymerisation wird in üblicher Weise unter Verwendung von Radikalbildnern, z. B. Peroxyden, als Katalysatoren bei Temperaturen zwischen Raumtemperatur und 200° C durchgeführt. Als Polymerisationsverfahren kommen die bekannten Polymerisationsverfahren, einschließlich der Substanzpolymerisation infrage, wobei eine Durchführung im Reaktionsextruder bevorzugt ist. Einige Eigenschaften der so erhaltenen Copolymere und Terpolymere ergeben sich aus der nachfolgenden Tabelle. Zur Bildung der Reaktionsschicht können die Polymere mit bis zu 50 Gewichtsprozent an basischer Substanz vermischt werden.

In der Tabelle stehen die folgenden Abkürzungen für:

| | | |
|------|---|----------------------------------------------|
| LM | = | Lösungsmittel |
| MSA | = | Maleinsäureanhydrid |
| WAS | = | Wasser |
| PHOS | = | Triammoniumphosphat |
| EVE | = | Ethylvinyläther |
| MAC | = | Methylacrylat |
| BAC | = | n-Butylacrylat |
| SUB | = | Substanz (lösungsmittelfrei) |
| ACE | = | Aceton |
| BEN | = | Benzol |
| LAP | = | Laurylperoxid |
| CHC | = | Bis(4-tertiärbutylcyclohexyl)peroxidicarbonat (Perkadox 16) |

## TABELLE

### Herstellung und Charakterisierung von Maleinsäureanhydrid-Copolymeren

(Abkürzungen auf gesondertem Blatt)

| Nr. | Comonomere | | Katalysator | | LM | Molverhältnis | | | Polymerisations- | | Löslichkeit b) | | | | | | | Fließbereich c) | Filme |
|---|---|---|---|---|---|---|---|---|---|---|---|---|---|---|---|---|---|---|---|
| | I | II | | % a) | | MSA | I | II | -temp. °C | -zeit h | WAS | NaOH 1 | 3 | 10 | PHOS 1 | 3 | 10 | °C | |
| 38 | EVE | | LAP | 0,1 | BEN | 1 | 1 | | 70 | 6 | 1 | | | 4 | | | 4 | 240E | flexibel |
| 39 | EVE | | LAP | 0,1 | SUB | 1 | 1 | | 70 | 6 | 1 | | | 3 | | | 4 | 240E | flexibel |
| 49 | MAC | | | ACE | 1 | 1 | | 80 | | 7 | 1 | | | 4 | | | 4 | 220E | flexibel, etwas klebrig |
| 51 | MAC | | | BEH | 1 | 1,2 | | 80 | | 6 | 1 | | | 3 | | | 4 | | flexibel, etwas klebrig |
| 68 | MAC | BAC | CHC | 0,1 | SUB | 1 | 0,6 | 0,4 | 60 | 7 | 1-2 | 4 | 4 | 4 | 4 | 4 | 4 | 220-230 | flexibel |
| 69 | MAC | BAC | CHC | 0,1 | SUB | 1 | 0,5 | 0,5 | 60 | 7 | 1-2 | 2 | 3 | 3 | 2 | 3 | 3 | | flexibel |

a) bezogen auf Monomerengemisch

b) 1/3/10: 1 bzw. 3 bzw. 10%ige Lösungen
   24 h-Beurteilung: 1 = unlöslich; 2=quillt; 3=langsam löslich; 4=schnell löslich

c) gemessen auf der Koflerbank ; E = nur Erweichung

A 22 810 EP

## Beispiele für steife Copolymere.

### Copolymerisation Vinylacetat/Maleinsäureanhydrid:

13 g (0,5 Mol) Vinylacetat, 49 g (0,5 Mol) Maleinsäureanhydrid und 0,1 g Lauroylperoxid wurden in 400 ml Benzol gelöst und fünf Stunden auf 70° C erhitzt. Aus der viskosen
Lösung wurde das Copolymere mit Petroläther (80 bis 100° C)
ausgefällt. Das Copolymere ist in verdünnter Natronlauge
gut löslich.

### Copolymerisation Styrol/Maleinsäureanhydrid:

52 g (0,5 Mol) Styrol und 49 g (0,5 Mol) Maleinsäureanhydrid wurden mit 0,1% Lauroylperoxid sechs Stunden lang
auf 80° C erhitzt. Es wurde ein Polymerisat erhalten, das
sich in verdünnter Natronlauge sehr gut löste.

0193213

Anmelder:                    Roland Karl Belz
                             Sonnenhalde 31

                             D-7022 Leinfelden-Echterdingen 1


A 22 810 EP


A n s p r ü c h e


Verbundfolie


1.  Verbundfolie aus mindestens zwei Schichten, bei der mindestens eine in Wasser normalerweise unlösliche Deckschicht
    mit einer in Wasser lösbaren, mindestens einschichtigen
    Reaktionsschicht verbunden ist, die Reaktionsschicht einen
    Lösungsvermittler für die Deckschicht enthält und mindestens die Deckschicht durch Extrudieren einer Folie aus
    einem thermoplastischen Kunststoff porenfrei ausgebildet
    ist, dadurch gekennzeichnet, daß die Reaktionsschicht und/
    oder die Deckschicht mindestens zum Teil aus Materialien
    bestehen, die nach dem Auflösen Bodenverbesserungseigenschaften und/oder Düngemitteleigenschaften besitzen.


2.  Verbundfolie nach Anspruch 1, dadurch gekennzeichnet, daß
    die Verbundfolie als selbsttragende Verbundplatte ausgebildet ist.


3.  Verbundfolie nach Anspruch 1 oder 2, dadurch gekennzeichnet, daß die Reaktionsschicht halbsteif, vorzugsweise steif
    ausgebildet ist.

Verbundfolie nach einem der Ansprüche 1 bis 3, dadurch gekennzeichnet, daß die Reaktionsschicht Füllstoffe, insbesondere mineralische Füller und/oder Fasermaterial enthält.

5. Verbundfolie nach einem der vorhergehenden Ansprüche, dadurch gekennzeichnet, daß die Reaktionsschicht nach Art von Papier, Karton, Pappe oder Wellpappe ausgebildet ist und das Bindemittel wasserlöslich ist oder in der durch den in der Reaktionsschicht enthaltenen Lösungsvermittler lösbar ist.

6. Verbundfolie nach einem der vorhergehenden Ansprüche, dadurch gekennzeichnet, daß sie in Form einer Schachtel geformt, insbesondere gefaltet ist.

7. Verbundfolie nach einem der vorhergehenden Ansprüche, dadurch gekennzeichnet, daß die Reaktionsschicht und/oder die Deckschicht bedruckt oder bedruckbar sind.

8. Verbundfolie nach einem der vorhergehenden Ansprüche, dadurch gekennzeichnet, daß die Reaktionsschicht und/oder die Deckschicht beim Einsatz der Verbundfolie für solche Verpackungen, die zum Auflösen in Flüssigkeiten, insbesondere in Abwasser, bestimmt sind, mindestens zum Teil aus Materialien bestehen, die Flockungsmittel sind bzw. beim Auflösen solche ergeben.

9. Verbundfolie nach einem der vorhergehenden Ansprüche, dadurch gekennzeichnet, daß die Deckschicht (3) und die Reaktionsschicht (2) aus demselben thermoplastischen Kunststoff bestehen und die Reaktionsschicht lösungsvermittelnde Zusätze für sich und für die Deckschicht enthält.

10. Verbundfolie nach einem der vorhergehenden Ansprüche, dadurch gekennzeichnet, daß sie auf der Deckschicht und/oder zwischen zwei Schichten eine im wesentlichen lichtdichte Schicht, insbesondere eine Aluminiumbedampfung aufweist.

11. Verwendung der Verbundfolie nach einem der vorhergehenden Ansprüche für Verpackungen, insbesondere solchen, die ausschließlich aus löslichen bzw. in feuchtem oder wässrigem Medium leicht zerfallenden Bestandteilen bestehen.

12. Verwendung nach Anspruch 11 für solche Verpackungen, die zur Verrottung durch Kompostierung o.dgl. bestimmt sind.

- - - - - - - - -

0193213

FIG. 1

FIG. 2

$H_2O$

FIG. 3